# EUROPÄISCHE PATENTANMELDUNG

(11) **EP 1 434 440 A1**
(43) Veröffentlichungstag der Anmeldung: **30.06.2004**
(21) Anmeldenummer: 03027523.4
(22) Anmeldetag: 29.11.2003
(51) Int. Cl.: H04N 7/16, H04L 12/58

(54) **Verfahren zur Informierung eines Benutzers über eine für ihn gespeicherte Nachricht**

(30) Priorität: 20.12.2002 DE 10260239
(71) Anmelder: Siemens Aktiengesellschaft, 80333 München (DE)
(72) Erfinder: Kortan, Michael, 1130 Wien (AT); North, Rudolf, 2860 Kirchschlag (AT); Rittsteiger, Wolfgang, 4060 Leonding (AT)
(74) Vertreter: Berg, Peter, Dipl.-Ing.

(57) **Zusammenfassung**

Es wird ein Verfahren zur Benachrichtigung eines Benutzers über das Vorliegen einer für ihn bestimmten, in einer oder mehreren Speichereinrichtungen (SE) abgelegten Nachricht (NN), angegeben, wobei der Zustand einer Speichereinrichtung (SE) von einer Überwachungseinrichtung (ÜE) überwacht und abhängig vom Ergebnis der Überwachung eine Mitteilung erzeugt wird, welche das Vorliegen einer Nachricht (NN) oder die Anzahl der Nachrichten (NN) angibt. Diese Mitteilung wird in Folge an eine Rundfunksendeeinrichtung (RSE) übermittelt, von der Rundfunksendeeinrichtung (RSE) ausgestrahlt, von einer dem Benutzer zugeordneten Rundfunkempfangseinrichtung (REE) empfangen, von dieser an die Ausgabeeinrichtung (AE) weitergereicht und dort ausgegeben. Weiterhin betrifft die Erfindung eine Überwachungseinrichtung (ÜE), welche die Durchführung des erfindungsgemäßen Verfahrens ermöglicht.

## Beschreibung

Verfahren zur Benachrichtigung eines Benutzers über das Vorliegen einer für ihn gespeicherten Nachricht.

Die Erfindung betrifft ein Verfahren zur Benachrichtigung eines Benutzers über das Vorliegen für ihn bestimmter, in einer oder mehreren Speichereinrichtungen abgelegter Nachrichten, wobei der Zustand einer Speichereinrichtung von einer Überwachungseinrichtung überwacht und abhängig vom Ergebnis der Überwachung eine Mitteilung erzeugt wird, welche das Vorliegen einer Nachricht oder die Anzahl der Nachrichten, insbesondere die Anzahl der neuen und der gelesenen Nachrichten, angibt. Weiterhin betrifft die Erfindung eine Überwachungseinrichtung, welche die Durchführung des erfindungsgemäßen Verfahrens ermöglicht.

Das Hinterlassen von Nachrichten beziehungsweise die asynchrone Kommunikation über Nachrichten sind zu wichtigen Einrichtungen im täglichen Leben, sowohl beruflich als auch privat, geworden. Als Beispiele werden hier Emails, SMS und Sprachnachrichten angeführt. Die angeführte Liste stellt hierbei nur einen kleinen Ausschnitt der denkbaren Möglichkeiten dar. Entscheidend für die Kenntnisnahme einer einlangenden Nachricht ist dabei, dass das entsprechende Kommunikationsmittel betriebs- und empfangsbereit ist.

Während der Empfang von beispielsweise Emails im geschäftlichen Betrieb zumindest während der Dienstzeit in der Regel durchgehend gewährleistet ist, stellt die Kenntnisnahme von privaten Emails insofern ein Problem dar, als privat genutzte Computer normalerweise nur unregelmäßig in Betrieb genommen werden. Eine eingelangte Email bleibt auf diese Weise unter Umständen wochenlang ungelesen.

Aber auch der Empfang von SMS und Sprachnachrichten, welche gewöhnlich überhaupt erst deswegen entstehen, weil der gewünschte Teilnehmer nicht erreichbar war, ist an ein betriebsbereites Mobiltelefon gebunden. Da private Telefone in der Regel über Nacht, dienstliche Telefone außerhalb der Dienstzeiten ausgeschaltet werden, ist eine Zustellung einer Nachricht in diesem Zeitraum nicht möglich. Eventuell dringende Nachrichten, welche wegen dieser menschlichen Gewohnheit nicht empfangen werden können, bleiben deshalb unerkannt.

Aus diesem Grund existieren nach dem Stand der Technik umfangreiche Möglichkeiten, einen Benutzer über das Vorliegen einer für ihn bestimmten, in einer Speichereinrichtung abgelegten Nachricht, zu informieren.

Beispielsweise wird das Vorliegen einer Sprachnachricht vielfach durch die Zustellung einer SMS, in welcher auf diesen Umstand hingewiesen wird, angezeigt. Auch das Vorliegen einer SMS, die etwa wegen eines Speicherüberlaufs im Mobiltelefon nicht angezeigt werden kann, wird beispielsweise durch ein entsprechendes, blinkendes Symbol angezeigt. Selbst das Eintreffen einer Email wird auf einem Computer durch ein sogenanntes "Popup Window" oder ein geeignetes Symbol angezeigt, um den Benutzer auch während seiner gewöhnlichen Tätigkeit, also ohne dass ein permanentes Überprüfen der Email-Box notwendig wäre, auf diese Nachricht hinzuweisen. Die vorgestellten Möglichkeiten bedingen ein betriebsbereites, dem Nachrichtentyp zugeordnetes Kommunikationsmittel, also etwa ein Mobiltelefon für eine Sprachnachricht, einen Computer für eine Email und so weiter.

Aber auch die Benachrichtigung über diese typbedingten Grenzen hinweg ist technisch möglich. So ist etwa die Benachrichtigung über das Vorliegen einer Email an ein Telefon bekannt. Dieser unter dem Begriff "Email Waiting Indication" bekannte Dienst ist etwa für ISDN, CENTREX und POTS standardisiert. Obwohl diese Möglichkeit die Quote für eine erfolgreiche, weitgehend unmittelbare Benachrichtigung erhöht, bleibt das Vorliegen vieler Nachrichten dennoch unerkannt.

Der Erfindung liegt also die Aufgabe zugrunde, ein verbessertes Verfahren zur Benachrichtigung eines Benutzers über das Vorliegen einer für ihn bestimmten, in einer Speichereinrichtung abgelegten Nachricht, anzugeben.

Dies geschieht erfindungsgemäß mit einem Verfahren der eingangs genannten Art,
- bei dem diese Mitteilung, versehen mit einer benutzerspezifischen Kennung, von einer Rundfunksendeeinrichtung ausgestrahlt wird, insbesondere periodisch wiederkehrend,
- bei dem diese Mitteilung von einer dem Benutzer zugeordneten Rundfunkempfangseinrichtung anhand der benutzerspezifischen Kennung aus den empfangenen Daten gefiltert wird und
- bei dem diese Mitteilung auf einer Ausgabeeinrichtung ausgegeben wird.

Rundfunkeinrichtungen, beispielsweise Radio und Fernsehen, werden von einem hohen Anteil der Bevölkerung genutzt, und dies großteils regelmäßig. Der erwähnte Radio- oder Fernsehempfänger ist im privaten Bereich in der Regel mehrere Stunden täglich in Betrieb, also deutlich länger als ein privat genutzter Computer beziehungsweise auch in Zeiten, in denen Mobiltelefone gewöhnlich ausgeschaltet sind.

Erfindungsgemäß wird nun parallel zu einem für die Öffentlichkeit bestimmten Programm eine Mitteilung über das Vorliegen einer Nachricht, versehen mit einer benutzerspezifischen Kennung, von einer Rundfunksendeeinrichtung ausgestrahlt. Eine dem Benutzer zugeordnete Rundfunkempfangseinrichtung empfängt diese Daten, also das für die Öffentlichkeit bestimmte Programm und auch alle benutzerspezifischen Informationen, sowohl die für den Benutzer bestimmten, als auch für die restlichen Teilnehmer bestimmten Informationen. Von dieser Rundfunkempfangseinrichtung werden für die Öffentlichkeit bestimmte und dem Benutzer zugeordnete Informationen aus dem Datenstrom gefiltert und auf einer Ausgabeeinrichtung ausgegeben. Die persönlichen Informationen für die restlichen Teilnehmer werden dagegen verworfen und sind für den Benutzer nicht zugänglich.

Denkbar sind hierbei beispielsweise Textnachrichten, die in das laufende Fernsehprogramm eingeblendet werden, etwa in der Art: "Neue Nachricht von Teilnehmer x eingetroffen" oder "y ungelesene, z gelesene Nachrichten". Möglich ist aber auch eine sprachbasierte Lösung, bei der die Mitteilung akustisch erfolgt, etwa erzeugt durch einen Sprachsynthesizer. Gleiches gilt auch für Radioempfang. Hier ist wieder die textbasierte Lösung, beispielsweise durch Darstellung auf einer Anzeige des Radioempfängers, oder die sprachbasierte Lösung, durch akustische Einspielung einer Mitteilung in das laufende Programm, denkbar.

Die Mitteilung selbst wird von der Rundfunksendeeinrichtung dabei insbesondere periodisch wiederkehrend gesendet, da die Empfangsbereitschaft einer Rundfunkempfangseinrichtung gewöhnlich nicht zu jeder Zeit gewährleistet werden kann. Ist jedoch ein permanenter Betrieb der Rundfunkempfangseinrichtung gegeben, reicht prinzipiell auch das einmalige Senden der Mitteilung, die in Folge in der Rundfunkempfangseinreichtung bis zur Ausgabe auf der Ausgabeeinrichtung zwischengespeichert wird.

Günstig ist es, wenn für die Überwachung des Zustands einer Speichereinrichtung die Anzahl der für einen Benutzer bestimmten, in der Speichereinrichtung abgelegten, Nachrichten periodisch von der Speichereinrichtung an die Überwachungseinrichtung übermittelt wird, insbesondere auf periodische Anforderung der Überwachungseinrichtung hin, oder bei einer Zustandsänderung in der Speichereinrichtung.

Bei einer ersten Variante wird die Speichereinrichtung, die beispielsweise Bestandteil eines Netzwerkes wie etwa des Internet ist, laufend von der Überwachungseinrichtung kontaktiert, um die Anzahl der einem Benutzer zugeordneten Nachrichten zu ermitteln. Die Benutzer, welche das erfindungsgemäße Service gebucht haben, können dabei zum Beispiel in einer Datenbank verwaltet werden, die auch für die Überwachungseinrichtung zugänglich ist. Diese Methode ist auch unter dem Begriff "Polling" bekannt. Das Übermitteln der Daten ist aber nicht notwendigerweise an eine Anforderung der Überwachungseinrichtung gebunden, sondern kann auch von der Speicher- oder den Speichereinrichtungen selbst veranlasst werden. Werden mehrere Speichereinrichtungen von einer Überwachungseinrichtung überwacht, so kann auch vorgesehen werden, dass die einzelnen Ergebnisse zu einem Gesammtergebnis addiert werden.

Bei einer zweiten Variante wird die Überwachungseinrichtung aktiv von der Speichereinrichtung bei einer Zustandsänderung in der Speichereinrichtung, also anlassbedingt, informiert. Vorteilhaft werden bei dieser Variante nur dann Daten von der Speicher- oder den Speichereinrichtungen an die Überwachungseinrichtung übermittelt, wenn auch tatsächlich eine Veränderung stattgefunden hat, und nicht wie beim Polling in mehr oder weniger regelmäßigen Zeitabständen, unabhängig von einer erfolgten Zustandsänderung. Die entsprechenden Datenverbindungen werden daher vergleichsweise wenig belastet.

In der Speichereinrichtung können dabei beispielsweise verschiedene Zugriffssicherungen vorgesehen werden, sodass der Zugang für die Überwachungseinrichtung auf die erwähnten Daten beschränkt bleibt, der Zugriff für den Benutzer jedoch im wesentlichen für alle Daten ermöglicht wird.

Günstig ist es weiterhin, wenn für die Überwachung eines Zustands einer Speichereinrichtung eine Zustandsänderung in der Speichereinrichtung, insbesondere das Eintreffen von Nachrichten, das Lesen von Nachrichten oder das Löschen von euen oder bereits gelesenen Nachrichten, von der Speichereinrichutng an die Überwachungseinrichtung übermittelt wird, und die einzelnen Zustandsänderungen in der Überwachungseinrichtung entsprechend aufsummiert werden.

Dabei wird die Überwachungseinrichtung aktiv von der Speichereinrichtung über eine Zustandsänderung beziehungsweise Transaktion, also anlassbedingt, informiert. Mit Hilfe der Überwachungseinrichtung wird in Folge gegebenenfalls eine entsprechende Mitteilung erzeugt, an die Rundfunksendeeinrichtung weitergeleitet und von dieser ausgestrahlt. Vorteilhaft werden bei dieser Variante nur dann Daten von der Speicher- oder den Speichereinrichtungen an die Überwachungseinrichtung übermittelt, wenn auch tatsächlich eine Veränderung stattgefunden hat. Als Zustandsänderungen kommen etwa das Eintreffen von Nachrichten, das Lesen von Nachrichten oder das Löschen von neuen oder bereits gelesenen Nachrichten in Betracht. Durch Summierung der einzelnen Transaktionen kann in der Überwachungseinrichtung stets ein Abbild des Zustands in der Speichereinrichtung oder den Speichereinrichtungen errechnet werden. Gegegebenenfalls sollte jedoch von Zeit zu Zeit oder anlaßbedingt ein Synchronisationsvorgang durchgeführt werden, um allfällige Differenzen zwischen Überwachungs- und Speichereinrichtung, etwa wegen einer fehlerhaften Datenübertragung, auszuschalten.

Eine vorteilhafte Variante der Erfindung ist auch mit einem Verfahren gegeben,
- bei dem eine von der Rundfunkempfangseinrichtung neu empfangene Mitteilung mit einer zuvor empfangen und bereits auf der Ausgabeeinrichtung ausgegebenen Mitteilung verglichen wird und
- bei dem die Ausgabe der neuen Mitteilung auf der Ausgabeeinrichtung bei Gleichheit unterdrückt wird oder die Rundfunksendeeinrichtung durch eine entprechende Rückmeldung angewiesen wird, diese Mitteilung nicht weiter auszustrahlen.

Damit wird sichergestellt, dass dem Benutzer ein und dieselbe Mitteilung lediglich einmal angezeigt wird, um den Benutzungskomfort zu steigern. Andernfalls würde eine Nachricht, etwa bei wiederholtem Einschalten der Rundfunkempfangseinrichtung, mehrmals angezeigt werden. Daher wird die Ausgabe entweder rein empfangsseitig, also durch die Rundfunkempfangseinrichtung unterdrückt oder sendeseitig, indem die Rundfunksendeeinrichtung angewiesen wird, eine Mitteilung nicht weiter auszustrahlen.

Besonders vorteilhaft ist eine Variante der Erfindung,
- bei der der Benutzer bei der Ausgabe der Mitteilung wahlweise eine der Mitteilung zugrunde liegende Nachricht anfordern kann und
- bei der diese Nachricht bei Anforderung über eine Schnittstelle, welche anhand des Nachrichtentyps und/oder der Nachrichtengröße bestimmt wird, übertragen wird.

Neben der eigentlichen Information über das Vorliegen einer Nachricht wird hierbei die Möglichkeit geboten, die der Mitteilung zugrunde liegende Nachricht an sich anzufordern. Da Rundfunksysteme in der Regel über keinen Rückkanal verfügen, was aber hier nicht grundsätzlich ausgeschlossen werden soll, wird ein weiterer Kommunikationskanal hergestellt und über diesen eine Anforderung an die Speichereinrichtung übermittelt, die Nachricht bereitzustellen. Denkbar sind hier Internetverbindungen oder auch Verbindungen in einem Telefonnetz, sowohl in drahtgebundenen Netzen als auch in Mobilfunknetzen. Erfindungsgemäß wird in Folge anhand des Nachrichtentyps und/oder der Nachrichtengröße ein geeigneter Sendekanal bestimmt und die Nachricht über diesen Kanal übermittelt. So können etwa kurze Nachrichten über die Rundfunksendeeinrichtung, umfangreiche über eine Internetverbindung übermittelt werden. Desgleichen ist der automatische Aufbau einer Telefonverbindung bei Vorliegen einer Sprachnachricht denkbar. Grundsätzlich kann die Übermittlung einer Nachricht aber auch über einen einzigen, festgelegten Kommunikationskanal, also ohne Berücksichtigung von Nachrichtentyp und -größe, erfolgen.

Vorteilhaft ist es, wenn als benutzerspezifische Kennung eine Adresse der Rundfunkempfangseinrichtung vorgesehen wird. Dabei wird jeder Rundfunkempfangseinrichtung, etwa bei der Produktion, eine Adresse zugeordnet, welche zum Empfang benutzerspezifischer Information verwendet wird. Dies ist für den Benutzer besonders komfortabel, da für die Nutzung des erfindungsgemäßen Verfahrens eine Benutzereingabe nicht erforderlich ist. Eine Initialisierung kann beispielsweise dadurch erfolgen, dass die Rundfunkempfangseinrichtung über einen Rückkanal eine Verbindung zur Überwachungseinrichtung aufbaut und dieser automatisch die Geräteadresse übermittelt.

Vorteilhaft ist es weiterhin, wenn von der Rundfunksendeeinrichtung und von der Rundfunkempfangseinrichtung für die Übertragung der Mitteilung der Standard "Multimedia Home Plattform" angewandt wird.

Der Standard "Digital Video Broadcasting (DVB); Multimedia Home Plattform (MHP) Specification 1.0.2", 06/2002, welcher unter www.etsi.org erhältlich ist, stellt eine vorteilhafte Möglichkeit dar, die benutzerspezifische Mitteilung im Rahmen von DVB zu senden, da der Standard das Senden von benutzerspezifischen Daten sowie interaktives Fernsehen generell ermöglicht. Das Anwendungsspektrum reicht dabei von der Übermittlung gebuchter Videofilme, der Anzeige von Textinformation, etwa dem "Electronic Program Guide", kurz EPG, bis hin zur Übermittlung von Programmapplikationen, die in der Programmiersprache JAVA abgefasst sind und vor Ort, das heißt in der Rundfunkempfangseinrichtung, gestartet werden.

Nach dem Stand der Technik ist der Empfang von solchen Daten mit Hilfe einer sogenannten "Set-Top-Box" möglich. Dieses Gerät entspricht in etwa einem Computer mit Festplatte sowie einem DVD-Laufwerk und einer DVB-Empfangseinheit. Aber auch Empfangseinheiten für terrestrisches Fernsehen oder Kabelfernsehen sind möglich. Darüber hinaus ist es von Vorteil, wenn die Set-Top-Box eine Anschlussmöglichkeit für einen Rückkanal umfasst, etwa über Internet beziehungsweise einen analogen oder digitalen Telefonanschluß. Erst dieser Rückkanal ermöglicht interaktives Fernsehen. Von der Rundfunksendeeinrichtung kann die Set-Top-Box weiterhin über eine ihr zugeordnete Geräteadresse angesprochen werden.

Ergänzend wird darauf hingewiesen, dass die Verwendung von MHP im Bezug auf die erwähnte Set-Top-Box keineswegs zwingend ist. Vielmehr ist die Verwendung einer Set-Top-Box oder eines dazu ähnlichen Geräts für die Anwendung des erfindungsgemäßen Verfahrens auch ohne den Standard MHP möglich.

Vorteilhaft ist es auch, wenn bei jeweils lokal begrenztem Empfangsgebiet mehrerer Rundfunksendeeinrichtungen eine den Benutzer betreffende Mitteilung von jener Rundfunksendeeinrichtung ausgestrahlt wird, welche aufgrund eines Identifikationsvorgangens des Benutzers an einer Rundfunkempfangseinrichtung im betreffenden Empfangsgebiet, insbesondere durch Eingabe eines Zugangscodes oder mit Hilfe einer Identifikationskarte, dazu angewiesen wird.

Das Empfangsgebiet eines Rundfunk-Anbieters ist gegebenenfalls auf meherere Rundfunksendeeinrichtungen aufgeteilt, welche etwa aufgrund ihrer Sendeleistung jeweils nur einen Teil des gesamten Empfangsgebietes abdecken. Aufgrund der begrenzten Bandbreite ist es ungünstig, benutzerbezogene Daten aller Benutzer von allen Rundfunksendeeinrichtungen auszustrahlen, da ein Benutzer sich zu einem bestimmten Zeitpunkt in der Regel im Empfangsgebiet nur einer Rundfunksendeeinrichtung aufhält. Daher werden die benuzterbezogenen Daten eines Benutzers vorteilhaft nur von einer Rundfunksendeeinrichtung ausgestrahlt, etwa von jener, die den Wohnort des betreffenden Benutzers erreicht. Von vorneherein kann jedoch nicht ausgeschlossen werden, dass der Benutzer die Mitteilung über das Vorliegen von Nachrichten auch an einem anderen Ort erhalten möchte, beispielsweise wenn er sich an einem Urlaubsort befindet. Hierzu wird an einer Rundfunkempfangseinrichtung eine Identifikation in Form eines Zugangscodes eingegeben, welche die entprechende Rundfunkempfangseinrichtung anweist, benutzerspezifische Daten für den dem Code zugeordneten Benutzer auszustrahlen. Denkbar ist auch die Indentifikation mit Hilfe einer dem Benutzer zugeordneten Identifikationskarte, welche zur Identifikation in ein Steckvorrichtung der Rundfunkempfangseinrichtung eingeschoben wird.

Die Aufgabe der Erfindung wird weiterhin durch eine Überwachungseinrichtung gelöst,
- welche eine Schnittstelle zu einer Speichereinrichtung und eine Schnittstelle zu einer Rundfunksendeeinrichtung umfasst,
- welche ein Detektionsmodul zur Ermittlung des Zustands einer Speichereinrichtung hinsichtlich für einen Benutzer bestimmter, dort abgelegter Nachrichten umfasst und
- welche ein Indikationsmodul zur Erzeugung einer Mitteilung über das Vorliegen oder die Anzahl solcher Nachrichten und zur Übermittlung dieser Mitteilung an die Rundfunksendeeinrichtung umfasst.

Die Überwachungseinrichtung bildet einen wichtigen Bestandteil zur Durchführung des erfindungsgemäßen Verfahrens. Mit ihrer Hilfe wird ermittelt ob für einen Benutzer neue Nachrichten vorliegen, und bei Bedarf wird eine Mitteilung über das Vorliegen neuer Nachrichten erzeugt. Die bauliche Trennung in Detektionsmodul und Indikationsmodul beziehungsweise in Speicher-, Überwachungs- und Rundfunksendeeinrichtung ist nicht zwingend. Vielmehr ist eine Gruppierung dieser funktionellen Bestandteile, gegebenenfalls auch in einem einzigen Gerät, denkbar.

Günstig ist es dabei, wenn das Detektionsmodul zur Überwachung des Zustands einer Speichereinrichtung für den Empfang der Anzahl der für einen Benutzer bestimmten, in der Speichereinrichtung abgelegten, Nachrichten und insbesondere für die periodische Anforderung hierzu vorgesehen ist.

Bei dieser Variante ist der Empfang der Anzahl der für einen Benutzer bestimmten Nachrichten vorgesehen. Dabei kann etwa zusätzlich in gelesene und ungelesene Nachrichten unterschieden werden. Vorteilhaft ist hier, dass eine eventuell vorhandene Speichereinrichtung weitgehend unverändert bleiben kann, da ihr Verhalten bei dieser Variante mehr oder weniger passiv ist.

Günstig ist es weiterhin, wenn das Detektionsmodul zur Überwachung des Zustands einer Speichereinrichtung für den Empfang einer Meldung betreffend eine Zustandsänderung in der Speichereinrichtung, insbesondere das Eintreffen von Nachrichten, das Lesen von Nachrichten oder das Löschen von neuen oder bereits gelesenen Nachrichten, und für das Aufsummieren der einzelnen Zustandsänderungen vorgesehen ist.

Hierbei ist der Empfang einer Meldung betreffend einer Zustandsänderung beziehungsweise Transaktion in der Speichereinrichtung vorgesehen. Vorteilhaft an diesem Detektionsmodul ist, dass es hinsichtlich seines technischen Aufbaus vergleichsweise einfach gehalten werden kann und dass eine Ermittlung des Zustands nicht permanent sondern lediglich anlassbedingt erfolgt. Das Detektionsmodul kann weiterhin eine Zählvorrichtung umfassen, welche das Aufsummieren der Zustandsänderungen oder Transaktionen ermöglicht.

Eine besonders vorteilhafte Ausgestaltung der Erfindung ist mit einer Überwachungseinrichtung gegeben, bei der das Indikationsmodul zur Erzeugung einer Mitteilung, welche die wahlweise Anforderung einer der Mitteilung zugrunde liegenden Nachricht ermöglicht, vorgesehen ist.

Hierbei verfügt das Indikationsmodul über Mittel, die das Erzeugen einer Mitteilung, welche zusätzlich funktionelle Bestandteile zur wahlweisen Anforderung der dieser Mitteilung zugrunde liegenden Nachricht beinhaltet, ermöglicht. Neben der reinen Textinformation sind in der Mitteilung also auch Steuerelemente enthalten. Diese Funktionalität ist etwa mit den aus Hypertextdokumenten bekannten Links vergleichbar und bietet dem Benutzer einen besonders einfachen Zugang zu seinen Nachrichten.

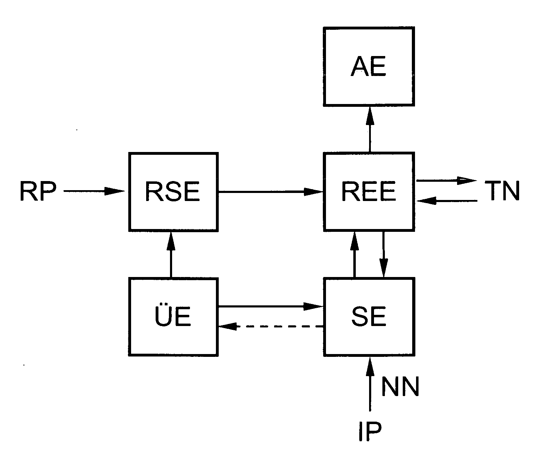

Die Erfindung wird nun anhand eines in der Figur 1 dargestellten Ausführungsbeispiels näher erläutert, welches die Benachrichtigung eines Benutzers über eine für ihn gespeicherte Nachricht betrifft.

Die Figur 1 umfasst eine Speichereinrichtung SE, eine Überwachungseinrichtung ÜE, eine Rundfunksendeeinrichtung RSE, eine Rundfunkempfangseinrichtung REE und eine Ausgabeeinrichtung AE.

Die Funktion der in der Figur 1 dargestellten Anordnung ist wie folgt:

Es wird angenommen, dass mit Hilfe der Speichereinrichtung SE eine neue Nachricht NN empfangen und gespeichert wird. Als konkretes Beispiel sei hier eine Email erwähnt, die auf einem entsprechendem Server abgelegt wird und für den Empfänger abrufbar ist. Dieser Vorgang ist mit einem Pfeil symbolisiert.

Unabhängig davon wird von der Überwachungseinrichtung ÜE laufend die Anzahl der für einen Benutzer bestimmten und in der Speichereinrichtung SE abgelegten Nachrichten ermittelt. Dieser Vorgang ist mit einem durchgezogen gezeichneten Pfeil von der Überwachungseinrichtung ÜE zur Speichereinrichtung SE dargestellt.

Optional zu dem erwähnten Verfahren kann aber auch die Speichereinrichtung SE für das Melden einer neuen Nachricht NN vorgesehen sein. Dies ist mit dem strichliert gezeichneten Pfeil von der Speichereinrichtung SE zur Überwachungseinrichtung ÜE visualisiert. Dort kann durch Aufsummieren die Gesamtzahl der gespeicherten Nachrichten berechnet werden.

Wenn also eine neue Nachricht NN vorliegt, wird in Folge eine entsprechende Mitteilung von der Überwachungseinrichtung ÜE erzeugt und an die Rundfunksendeeinrichtung RSE weitergeleitet. Dieser Vorgang ist mit einem Pfeil von der Überwachungseinrichtung ÜE zur Rundfunksendeeinrichtung RSE symbolisiert. Die Mitteilung enthält im gezeigten Beispiel auch Steuerelemente, die dem empfangenden Benutzer die Anforderung der gespeicherten Nachricht auf einfache Weise ermöglicht, etwa durch einen sogenannten "Link". Dies ist jedoch keinesfalls zwingend.

In Folge wird die Mitteilung von der Rundfunksendeeinrichtung RSE ausgestrahlt und von der Rundfunkempfangseinrichtung REE des empfangenden Benutzers neben dem für die Öffentlichkeit bestimmten Rundfunkprogramm RP empfangen, aus dem Datenstrom gefiltert, an die Ausgabeeinrichtung AE übermittelt und dort ausgegeben. Der Kommunikationsweg ist wieder mit Pfeilen symbolisiert, von der Überwachungseinrichtung ÜE über die Rundfunksendeeinrichtung RSE und die Rundfunkempfangseinrichtung REE zur Ausgabeeinrichtung AE. Bei der Rundfunksendeeinrichtung RSE ist zusätzlich der Eingang des Rundfunkprogramms RP mit Hilfe eines Pfeils symbolisiert.

Zur besseren Vorstellung wird als konkretes Beispiel für die Rundfunksendeeinrichtung RSE ein Satellit für digitales Fernsehen, für die Rundfunkempfangseinrichtung REE eine Set-Top-Box und für die Ausgabeeinrichtung AE ein Fernseher angegeben. Es wird aber darauf hingewiesen, dass dieses konkrete Beispiel keineswegs als Einschränkung des allgemeinen erfinderischen Gedankens zu verstehen ist.

Der Benutzer und Adressat der eingegangenen, neuen Nachricht NN wird - unter der Annahme, dass dieser am Rundfunkprogramm teilnimmt, das heißt im konkreten Fall, dass er fernsieht - mehr oder weniger synchron über das Vorliegen einer neuen Nachricht NN informiert, indem die Mitteilung in das aktuelle Rundfunkprogramm RP eingeblendet wird. Der Benutzer, auf diese Weise aufmerksam gemacht, fordert daraufhin die eigentliche Nachricht NN durch Aktivierung des ebenfalls eingeblendeten Links von der Speichereinrichtung SE an.

In Folge baut die Rundfunkempfangseinrichtung REE automatisch eine Verbindung zur Speichereinrichtung SE auf und übermittelt die Anforderung der Nachricht NN. Da die neue Nachricht NN im gezeigten Beispiel vergleichsweise groß sei, wird diese nicht über die Rundfunksendeeinrichtung RSE sondern direkt von der Speichereinrichtung SE zur Rundfunkempfangseinrichtung REE übermittelt. Aufgrund der begrenzten Kapazität des Funkkanals werden nämlich in der Regel nur relativ kleine Nachrichten über die Rundfunksendeanlage RSE gesendet. Das Senden der Anforderung sowie die Übermittlung der neuen Nachricht NN ist in der Figur 1 wiederum mit Hilfe von Pfeilen zwischen der Rundfunkempfangseinrichtung REE und der Speichereinrichtung SE symbolisiert. Aus Sicherheitsgründen kann das Senden von Nachrichten über den Funkkanal jedoch auch gänzlich ausgeschlossen werden beziehungsweise das Verschlüsseln der Nachrichten vorgesehen sein.

Daher können für die Rundfunkempfangseinrichtung REE noch weitere Kommunikationswege vorgesehen sein, etwa ein Anschluss zu einem Mobilfunknetz, ein Anschluss zum Internet, ein Telefonanschluß und so weiter. Diese Anschlussmöglichkeit an ein weiteres Telekommunikationsnetz TN ist ebenfalls mit zwei Pfeilen symbolisiert.

Dabei wird der zu nutzende Kommunikationsweg etwa anhand des Nachrichtentyps festgelegt, also zum Beispiel eine Internetverbindung für Emails und eine Telefonverbindung für Sprachnachrichten. Selbstverständlich ist für die Anforderung der Nachricht auch ein manueller Aufbau des Kommunikationswegs denkbar, also etwa ein Telefonanruf zum Voice-Mail-Server ohne Einbeziehung des Rundfunkempfängers REE oder das Abfragen von E-mails von einem PC aus.

Neben der Anforderung einer Nachricht mit Hilfe eines Links ist auch möglich, dass eine Mailboxadresse in der Rundfunkempfangseinrichtung REE gespeichert und für den Verbindungsaufbau zu dieser Adresse verwendet wird. Dies hat den Vorteil, dass eine Zugangsadresse zu einer Mailbox, etwa in Form eines Links, nicht über den Funkkanal ausgestrahlt wird. Dort bestünde nämlich prinzipiell für jedermann eine Empfangsmöglichkeit und somit die potentielle Möglichkeit für Mißbrauch.

Schließlich ist es auch denkbar, dass das Rundfunksystem selbst über einen Rückkanal, also über einen direkten Kommunikationsweg von der Rundfunkempfangseinrichtung REE zur Rundfunksendeeinrichtung RSE, verfügt und die die Rundfunkempfangseinrichtung REE zur Übermittlung der Anforderung der Nachricht NN diesen Rückkanal nutzt.

## Patentansprüche

1. Verfahren zur Benachrichtigung eines Benutzers über das Vorliegen für ihn bestimmter, in einer oder mehreren Speichereinrichtungen (SE) abgelegter Nachrichten (NN),
- wobei der Zustand einer Speichereinrichtung (SE) von einer Überwachungseinrichtung (ÜE) überwacht und abhängig vom Ergebnis der Überwachung eine Mitteilung erzeugt wird, welche das Vorliegen einer Nachricht (NN) oder die Anzahl der Nachrichten (NN), insbesondere die Anzahl der neuen und der gelesenen Nachrichten (NN), angibt,
**dadurch gekennzeichnet,**
- **dass** diese Mitteilung, versehen mit einer benutzerspezifischen Kennung, von einer Rundfunksendeeinrichtung (RSE) ausgestrahlt wird, insbesondere periodisch wiederkehrend,
- **dass** diese Mitteilung von einer dem Benutzer zugeordneten Rundfunkempfangseinrichtung (REE) anhand der benutzerspezifischen Kennung aus den empfangenen Daten gefiltert wird und
- **dass** diese Mitteilung auf einer Ausgabeeinrichtung (AE) ausgegeben wird.

2. Verfahren nach Anspruch 1,
**dadurch gekennzeichnet, dass** für die Überwachung des Zustands einer Speichereinrichtung (SE) die Anzahl der für einen Benutzer bestimmten, in der Speichereinrichtung (SE) abgelegten, Nachrichten (NN) periodisch von der Speichereinrichtung (SE) an die Überwachungseinrichtung (ÜE) übermittelt wird, insbesondere auf periodische Anforderung der Überwachungseinrichtung (ÜE) hin, oder bei einer Zustandsänderung in der Speichereinrichtung (SE).

3. Verfahren nach einem der Ansprüche 1 bis 2,
**dadurch gekennzeichnet,**
- **dass** eine von der Rundfunkempfangseinrichtung (REE) neu empfangene Mitteilung mit einer zuvor empfangen und bereits auf der Ausgabeeinrichtung (AE) ausgegebenen Mitteilung verglichen wird und
- **dass** die Ausgabe der neuen Mitteilung auf der Ausgabeeinrichtung (AE) bei Gleichheit unterdrückt wird oder die Rundfunksendeeinrichtung (RSE) durch eine entprechende Rückmeldung angewiesen wird, diese Mitteilung nicht weiter auszustrahlen.

4. Verfahren nach einem der Ansprüche 1 bis 3,
**dadurch gekennzeichnet,**
- **dass** der Benutzer bei der Ausgabe der Mitteilung wahlweise eine der Mitteilung zugrunde liegende Nachricht (NN) anfordern kann und
- **dass** diese Nachricht (NN) bei Anforderung über eine Schnittstelle, welche anhand des Nachrichtentyps und/oder der Nachrichtengröße bestimmt wird, übertragen wird.

5. Verfahren nach einem der Ansprüche 1 bis 4, **dadurch gekennzeichnet, dass** als benutzerspezifische Kennung eine Adresse der Rundfunkempfangseinrichtung (REE) vorgesehen wird.

6. Verfahren nach einem der Ansprüche 1 bis 5, **dadurch gekennzeichnet, dass** von der Rundfunksendeeinrichtung (RSE) und von der Rundfunkempfangseinrichtung (REE) für die Übertragung der Mitteilung der Standard "Multimedia Home Plattform" angewandt wird.

7. Verfahren nach einem der Ansprüche 1 bis 6, **dadurch gekennzeichnet, dass** bei jeweils lokal begrenztem Empfangsgebiet mehrerer Rundfunksendeeinrichtungen (RSE) eine den Benutzer betreffende Mitteilung von jener Rundfunksendeeinrichtung (RSE) ausgestrahlt wird, welche aufgrund eines Identifikationsvorgangens des Benutzers an einer Rundfunkempfangseinrichtung (REE) im betreffenden Empfangsgebiet, insbesondere durch Eingabe eines Zugangscodes oder mit Hilfe einer Identifikationskarte, dazu angewiesen wird.

8. Überwachungseinrichtung (ÜE), **dadurch gekennzeichnet,**
- **dass** diese eine Schnittstelle zu einer Speichereinrichtung (SE) und eine Schnittstelle zu einer Rundfunksendeeinrichtung (RSE) umfasst,
- **dass** diese ein Detektionsmodul zur Ermittlung des Zustands einer Speichereinrichtung (SE) hinsichtlich für einen Benutzer bestimmter, dort abgelegter Nachrichten (NN) umfasst und
- **dass** diese ein Indikationsmodul zur Erzeugung einer Mitteilung über das Vorliegen oder die Anzahl solcher Nachrichten (NN) und zur Übermittlung dieser Mitteilung an die Rundfunksendeeinrichtung (RSE) umfasst.

9. Überwachungseinrichtung (ÜE) nach Anspruch 8, **dadurch gekennzeichnet, dass** das Detektionsmodul zur Überwachung des Zustands einer Speichereinrichtung (SE) für den Empfang der Anzahl der für einen Benutzer bestimmten, in der Speichereinrichtung (SE) abgelegten, Nachrichten (NN) und insbesondere für die periodische Anforderung hierzu vorgesehen ist.

10. Überwachungseinrichtung (ÜE) nach einem der Ansprüche 8 bis 9, **dadurch gekennzeichnet, dass** das Indikationsmodul zur Erzeugung einer Mitteilung, welche die wahlweise Anforderung einer der Mitteilung zugrunde liegenden Nachricht (NN) ermöglicht, vorgesehen ist.
